# EUROPEAN PATENT APPLICATION

(11) **EP 4 654 553 A1**
(43) Date of publication of application: **26.11.2025**
(21) Application number: 25176150.8
(22) Date of filing: 13.05.2025
(51) Int. Cl.: H04L 61/103, H04L 61/58, H04L 61/59

(54) **USE OF EXTERNALLY MAINTAINED HOST IP INFORMATION**

(30) Priority: 21.05.2024 US 202418670582
(71) Applicant: Arista Networks, Inc., Santa Clara, CA 95054 (US)
(72) Inventor: KALEESWARAN, Shalini, Santa Clara, 95054 (US); UPADHYAY, Ronak, Santa Clara, 95054 (US); MAJUMDAR, Kaustav, Santa Clara, 95054 (US); RAJAGOPAL, Ganesan, Santa Clara, 95054 (US)
(74) Representative: Barton, Russell Glen

(57) **Abstract**

A network device may obtain host network layer information such as host IP addresses from an external source. The external source may provide the network device with the network layer information of hosts connected to the network device. Accordingly, the network device may use the externally obtained network layer information to perform certain operations that would otherwise not be possible in the absence of the network layer information.

## Description

This application claims priority to U.S. patent application No. 18/670,582, filed May 21, 2024, which is hereby incorporated by reference herein in its entirety.

### Background

A communication system includes multiple network devices that are interconnected to form a network for conveying network traffic between hosts. In order to facilitate appropriate forwarding of the network traffic and other network operations, the network devices may store Media Access Control (MAC) addresses of hosts and/or Internet Protocol (IP) addresses of hosts.

### Brief Description of the Drawings

FIG. 1 is a diagram of an illustrative network having network devices coupled to end hosts in accordance with some embodiments.
FIG. 2 is a diagram of an illustrative network device in accordance with some embodiments.
FIG. 3 is a diagram of an illustrative network device configured to obtain network layer information of hosts from an external source in accordance with some embodiments.
FIG. 4 is a diagram of illustrative messages exchanged between a network device and an external source to obtain host network layer information based on a command in accordance with some embodiments.
FIGS. 5A and 5B are diagrams of illustrative messages exchanged between a network device and an external source to obtain host network layer information based on a subscription in accordance with some embodiments.
FIG. 6A is a diagram of an illustrative source of host network layer information curating host network layer information for one or more network devices in accordance with some embodiments.
FIG. 6B is a diagram of illustrative messages exchanged between a network device and an external source to obtain curated host network layer information based on a subscription in accordance with some embodiments.
FIG. 7 is a diagram of multiple illustrative external sources storing network layer information for different hosts coupled to a single network device in accordance with some embodiments.
FIG. 8 is a flowchart of illustrative operations for obtaining network layer information of hosts from an external source in accordance with some embodiments.
FIG. 9 is a flowchart of illustrative operations for performing a network accounting operation in accordance with some embodiments.

### Detailed Description

A network can convey network traffic, e.g., in the form of frames, packets, etc., between hosts or generally between devices in the network. Network layer information such as Internet Protocol (IP) addresses for hosts may be useful in performing certain networking functions such as transmission of network accounting messages and may therefore be maintained at a network device that performs these networking functions. However, in some illustrative configurations described herein as an example, the network layer information for connected hosts may be absent from certain network devices in the network. Even still, it may be desirable for these types of network devices to perform the networking functions that require the network layer information.

Accordingly, a network device that lacks locally stored network layer information for connected hosts (e.g., IP information such as IP addresses for authenticated hosts) may obtain the host network layer information from an external source such as a network layer device (e.g., a gateway or router, a multi-layer switch, etc.) coupled to an input-output interface of the network device, e.g., via a wired cable. As examples, the network device may send commands to the external source to obtain IP addresses of connected hosts, may subscribe to receive the (current and/or any updated) states of the IP addresses of the connected hosts maintained at the external source, and/or may otherwise obtain the host IP addresses from the external source. Based on the externally obtained host network layer information, the network device may perform networking functions using the externally obtained host network layer information. As an example, the network device may transmit accounting messages for authenticated hosts based on IP addresses of the authenticated hosts obtained from one or more external sources.

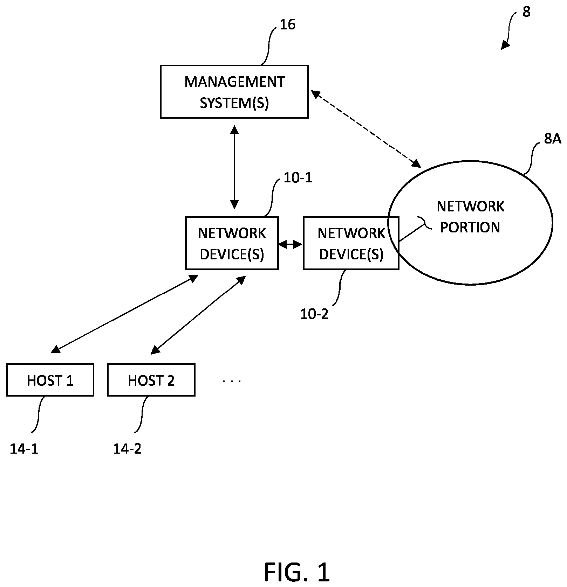

An illustrative networking system that includes one or more network devices configured to obtain network layer information externally and use the externally obtained network layer information is shown in FIG. 1. In the example of FIG. 1, the networking system may include one or more components of a network such as network 8. Network 8 may have any suitable scope. As examples, network 8 may include, be, and/or form part of one or more local segments, one or more local subnets, one or more local area networks (LANs), one or more virtual local area networks (VLANs), one or more data center networks, one or more campus area networks, a wide area network, etc. Network 8 may include a wired network portion (e.g., including network devices 10-1 and 10-2, network portion 8A, etc.) based on wired technologies or standards such as Ethernet (e.g., using copper cables and/or fiber optic cables) and, if desired, may include a wireless network portion such as one or more wireless local area networks (WLANs) (e.g., Wi-Fi networks compliant with the IEEE 802.11 family of standards) provided by wireless access point(s). If desired, network 8 may include, within network portion 8A, internet service provider networks (e.g., the Internet) or other public service provider networks, private service provider networks (e.g., multiprotocol label switching (MPLS) networks), and/or other types of networks such as telecommunication service provider networks.

Network 8 may be implemented using and to include one or more network devices that handle (e.g., process by switching, routing, forwarding, modifying, etc.) network traffic to convey information for user applications between end hosts and/or for other applications, services, and functions generally between devices. In general, network 8 can include networking equipment forming a variety of network devices that interconnect end hosts of network 8. These network devices of network 8 may include one or more wireless access points, one or more switches (e.g., single-layer (Layer 2) switches, multi-layer (Layer 2 and Layer 3) switches, etc.), one or more bridges, one or more routers or gateways, one or more hubs, one or more repeaters, one or more firewalls, one or more devices serving other networking functions, one or more devices that include the functionality of two or more of these devices, and/or management equipment that manage and control the operation of one or more of other network devices.

End hosts of network 8 can include computers, servers, portable electronic devices such as cellular telephones and laptops, other types of specialized or general-purpose host computing equipment (e.g., running one or more client-side and/or server-side applications), network-connected appliances or devices such as cameras, thermostats, wireless sensors, medical, health, or other sensors, lighting fixtures, speakers, printers, controllers, and other network-connected equipment that serve as input-output devices and/or computing devices in a distributed networking system, devices used by network administrators (sometimes referred to as administrator devices), network service devices, and/or management equipment that manage and control the operation of one or more of other end hosts and/or network devices. These different types of equipment and/or devices based on which hosts of network 8 are implemented may sometimes be referred to herein generally as host devices.

As shown in FIG. 1, network devices of network 8 may include different sets of network devices such as a set of access network devices 10-1 and an additional set of network devices 10-2 upstream from network devices 10-1 and coupled to network devices 10-1 via corresponding wired connections (e.g., cables). End hosts such as end hosts 14 (e.g., hosts 14-1, 14-2, etc.) may be coupled to network devices 10-2 via intervening network devices 10-1 and may be coupled to network portion 8A (e.g., the Internet) via network devices 10-1 and 10-2. There may be additional intervening network device(s) between hosts 14 and network devices 10-1, between network devices 10-1 and network devices 10-2, and/or between network devices 10-2 and network portion 8A.

In some configurations described herein as examples, network devices 10-1 may be data link layer devices (e.g., Layer 2 (L2) network devices that perform data unit processing associated with Layer 2 of the Open Systems Interconnection (OSI) model) such as single-layer or L2 switches, and network devices 10-2 may be network layer devices (e.g., Layer 3 (L3) network devices that perform the data unit processing associated with Layer 3 of the OSI model) such as multi-layer (L2 and L3) switches, routers, gateways, and/or other devices having routing or other network layer functionalities. If desired, multiple network devices 10-1 may each have one or more input-output interfaces (e.g., external network interfaces) coupled to a single network device 10-2. If desired, multiple network devices 10-2 may each have one or more input-output interfaces (e.g., external network interfaces) coupled to a single network device 10-1.

To manage the operations of network 8, one or more network management systems 16 may be communicatively coupled to different components of network 8. As an example, management system 16 may include one or more network management servers that each provide network authentication services, network authorization services, network accounting services, network administration services, network access control services, network device provisioning services, network device management services, network security services, and/or other types of services. In some illustrative configurations described herein, management system 16 may include a Remote Authentication Dial-In User Service (RADIUS) server configured to provide network authentication, authorization, and accounting (AAA) services (e.g., authentication, authorization, and accounting services for hosts and/or users).

The servers of system(s) 16 may be implemented on server equipment. The server equipment may include server hardware such as one or more blade servers, one or more rack servers, and/or one or more tower servers. Compute devices and storage devices for implementing the functions of these servers may be provided as part of the server hardware.

The compute devices may include one or more processors or processing units based on any suitable combination of processor architectures. The storage devices may include non-volatile memory such as hard disk drive storage and solid-state storage, volatile memory such as random-access memory, and/or other storage circuitry. In general, the storage devices may include one or more non-transitory (tangible) computer-readable storage media that store the operating system software and/or any other software code, sometimes referred to as program instructions, software, data, instructions, or code. The compute devices may run (e.g., execute) an operating system and/or other software and firmware stored on the one or more non-transitory computer-readable storage media to perform the desired operations of the server(s) (e.g., to provide network authentication, authorization, and accounting services). In other illustrative arrangements, one or more functions of management system 16 may be implemented on one or more dedicated local devices or generally implemented using non-server hardware.

Management system 16 may provide, based on the compute devices executing instructions stored on the corresponding storage devices, one or more of the above-mentioned services (e.g., AAA services for network 8) by receiving messages from network devices such as network device 10-1, by processing the received messages, by generating corresponding reply messages in response to the request messages, and/or by transmitting the reply messages. When these messages are exchanged with a RADIUS server, the message may be RADIUS messages (e.g., RADIUS authentication messages, RADIUS accounting messages, etc.).

Depending on the network configuration and the configuration system 16, the messages (e.g., authentication messages, accounting messages, etc.) may be exchanged via any suitable communication paths. As an example, these communication paths may include wired network paths through wired network portion 8A (e.g., through the network devices therein, using the Internet, etc.). In particular, server(s) for system 16 may be coupled (e.g., communicatively coupled) to network devices 10-1 via network devices 10-2 and network portion 8A (e.g., including the Internet) and/or may be coupled to network devices 10-1 via other paths (e.g., with different intervening devices or no intervening devices).

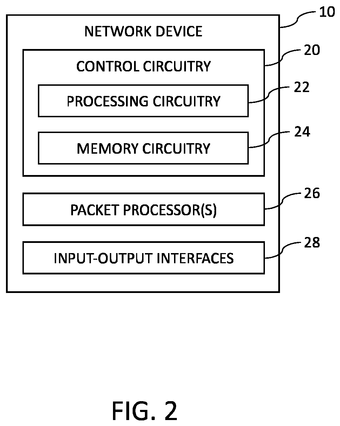

FIG. 2 is a diagram of an illustrative network device such as network device 10 that may be used to implement any of network devices 10-1 and/or network devices 10-2 in FIG. 1. In arrangements in which network devices 10-1 and 10-2 have different functions (e.g., due to their relative locations within network 8 and to hosts 14, due to their implementation or configuration, etc.), network device 10-2 may have certain components omitted from network device 10-1, may omit certain components included within network device 10-1, may have components that are configured differently than those of network device 10-1, etc.

As shown in FIG. 2, network device 10 may include control circuitry 20 having processing circuitry 22 and memory circuitry 24, one or more packet processors 26, and input-output interfaces 28. In one illustrative arrangement, network device 10 may be or form part of a modular network device system (e.g., a modular switch system having removably coupled modules usable to flexibly expand characteristics and capabilities of the modular switch system such as to increase ports, provide specialized functionalities, etc.). In another illustrative arrangement, network device 10 may be a fixed-configuration network device (e.g., a fixed-configuration switch having a fixed number of ports and/or a fixed hardware configuration).

Processing circuitry 22 may include one or more processors such as central processing units (CPUs), graphics processing units (GPUs), microprocessors, general-purpose processors, host processors, microcontrollers, digital signal processors, programmable logic devices such as field programmable gate array (FPGA) devices, application specific system processors (ASSPs), application specific integrated circuit (ASIC) processors, and/or other types of processors.

Processing circuitry 22 may run (e.g., execute) a network device operating system and/or other software/firmware that is stored on memory circuitry 24. Memory circuitry 24 may include one or more non-transitory (tangible) computer-readable storage media that store the operating system software and/or any other software code, sometimes referred to as program instructions, software, data, instructions, or code. In particular, memory circuitry 24 may include non-volatile memory (e.g., flash memory, electrically-programmable read-only memory, a solid-state drive, hard disk drive storage, etc.), volatile memory (e.g., static or dynamic random-access memory), removable storage devices (e.g., storage devices removably coupled to device 10), and/or other types of memory circuitry.

As an example, certain operations such as host authentication operations, host accounting operations, operations for obtaining host network layer information, etc. as described herein may be performed by network device 10-1 (e.g., implemented using an instance of network device 10 in FIG. 2) and/or by network device 10-2 (e.g., implemented using another instance of network device 10 in FIG. 2). These operations may be stored as (software) instructions on the one or more non-transitory computer-readable storage media (e.g., in portion(s) of memory circuitry 24 in network device 10). The corresponding processing circuitry (e.g., one or more processors of processing circuitry 22 in network device 10) may process or execute the respective instructions to perform the above-mentioned operations.

Processing circuitry 22 and memory circuitry 24 as described above may sometimes be referred to collectively as control circuitry 20 (e.g., implementing a control plane of network device 10). Accordingly, processing circuitry 22 may also sometimes be referred to as control plane processing circuitry 22. As just a few examples, processing circuitry 22 may execute network device control plane software such as operating system software, routing policy management software, routing protocol agents or processes, routing information base agents, and other control software, may be used to support the operation of protocol clients and/or servers (e.g., to form some or all of a communications protocol stack), may be used to support the operation of packet processor(s) 26, may store packet forwarding information, may execute packet processing software, and/or may execute other software instructions that control the functions of network device 10 and the other components therein.

Packet processor(s) 26 may be used to implement a data plane or forwarding plane of network device 10 and may therefore sometimes be referred to herein as data plane processor(s) 26 or data plane processing circuitry 26. Packet processor(s) 26 may include one or more processors such as programmable logic devices (e.g., field programmable gate array (FPGA) devices), application specific system processors (ASSPs), application specific integrated circuit (ASIC) processors, central processing units (CPUs), graphics processing units (GPUs), microprocessors, general-purpose processors, host processors, microcontrollers, digital signal processors, and/or other types of processors.

A packet processor 26 may receive incoming (ingress) network traffic via input-output interfaces 28, parse and analyze the received network traffic, process the network traffic based on packet forwarding decision data (e.g., in a forwarding information base) and/or in accordance with network protocol(s) or other forwarding policy, and forward (or drop) the network traffic accordingly (e.g., egress the processed network traffic via input-output interfaces 28). The packet forwarding decision data may be stored on memory circuitry integrated as part of and/or separate from packet processor 26 (e.g., on content-addressable memory), and/or on a portion of memory circuitry 24. Memory circuitry for packet processor 26 may include volatile memory, non-volatile memory, and/or other types of memory circuitry.

Input-output interfaces 28 (sometimes referred to herein as network interfaces) may include one or more different types of communication interfaces such as Ethernet interfaces, optical interfaces, and/or other types of communication interfaces for connecting network device 10 to the Internet, a local area network, a wide area network, a mobile network, and/or generally other network device(s) (e.g., network device 10-1, network device 10-2, etc.), peripheral devices, and computing equipment (e.g., host equipment implementing system 16 and host 14 such as server equipment, host devices, etc.).

In illustrative configurations described herein as an example, input-output interfaces 28 may include Ethernet interfaces implemented using and therefore include (Ethernet) ports. In particular, physical layer and/or data link layer interface circuitry in network device 10 may be coupled to the ports and use the ports to form Ethernet interfaces with the desired interface configurations. The ports may be physically coupled and electrically connected to corresponding mating connectors of external equipment, when received at the ports, and may have different form-factors to accommodate different cables, different modules, different devices, or generally different external equipment.

If desired, network device 10 may include other components such as input-output devices (e.g., devices that provide user output such as a display device or one or more status lights, devices that gather user input such as one or more buttons, etc.). If desired, the other components on network device 10 may include power supply components, power management components, a system bus and/or other communication paths that couple the components of network device 10 to one another, etc. As an example, each component of network device 10 may be coupled to control circuitry 20 (e.g., processing circuitry 22 and/or memory circuitry 24) via one or more paths that enable the reception and transmission of control signals, data, and/or other information therebetween.

In some network configurations, a number of network devices in network 8 such as a network device 10-1 in FIG. 1 may be a data link layer (L2) network device that lacks locally stored network layer (L3) information (e.g., IP addresses of hosts 14 connected to the L2 network device and/or other IP information). As examples, the L2 network device may be a device solely responsible for processing L2 traffic and therefore may lack L3 traffic processing functionality and is therefore not configured to store L3 information, may be a device that has L2 and L3 traffic processing circuitry but is not configured or not enabled to process L3 traffic (e.g., the L3 traffic processing circuitry is non-operational or remains un-configured) and is therefore not configured to store L3 information, or generally may be a device from which locally stored L3 information is absent or otherwise inaccessible.

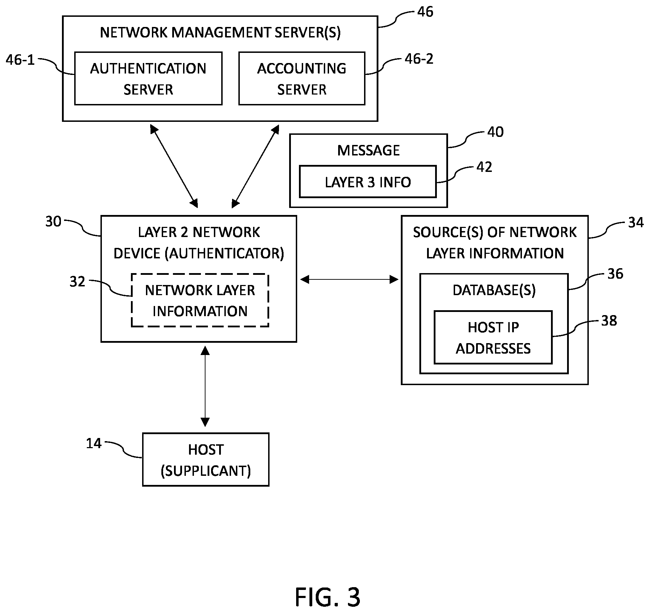

In some contexts, it may be desirable or even required that the L2 network device (e.g., without locally stored L3 information) provide IP or other L3 information of connected hosts 14 to external equipment (e.g., management system 16 in FIG. 1) or use the L3 information in other manners. FIG. 3 shows an illustrative network configuration (e.g., implemented using network 8 in FIG. 1) that includes such an L2 network device (e.g., network device 30).

Configurations in which the L2 network device performs host authentication (e.g., IEEE 802.1X authentication) and performs network accounting for authenticated hosts (i.e., host accounting) are sometimes described herein as an example. In this example, network accounting for authenticated hosts may require L3 information such as IP addresses (e.g., Internet Protocol version 4 (IPv4) addresses and/or Internet Protocol version 6 (IPv6) addresses) of authenticated hosts. While such L3 information may not be locally stored and/or available on the L2 network device, the L2 network device may obtain the L3 information from one or more external sources. This example described in connection with the application of host authentication and accounting is merely illustrative. If desired, the externally obtained L3 information may be used by the L2 network device to perform other networking functions instead of or in network accounting for authenticated hosts.

In the example of FIG. 3, which shows an illustrative implementation of host authentication and accounting for authenticated hosts, a host 14 may be communicatively coupled to an L2 network device such as L2 network device 30 (e.g., network device 10-1 in FIG. 1). L2 network device 30 may perform an authentication operation in which L2 network device 30 serves as the authenticator and host 14 serves as the supplicant. L2 network device 30 may communicate with an authentication server such as authentication server 46-1 (e.g., a RADIUS server) to authenticate network access of host 14. If desired, authentication server 46-1 may be one of many network management servers 46 (e.g., forming system 16 in FIG. 1). In configurations in which server 46-1 is implemented as part of a RADIUS server, the messages exchanged between L2 network device 30 and server 46-1 may be RADIUS authentication request, reply, and/or other messages in accordance with the RADIUS protocol.

As described above, configurations in which L2 network device 30 lacks network layer information 32 (e.g., does not locally store and/or cannot locally access network layer information 32) are sometimes described herein as an example. In this example, L2 network device 30 may obtain network layer information for host 14, connected to a given input-output interface of L2 network device 30 and authenticated by L2 network device 30 for network access, from one or more external or remote sources 34 of network layer information (e.g., host network layer address information such as host IP addresses or other host IP information).

Sources 34 of network layer information may include L3 network devices (e.g., devices 10-2 in FIG. 1) that maintain network layer information (e.g., IP addresses) for hosts of the network to facilitate appropriate forwarding (e.g., routing) of network traffic for the hosts, may include network device provisioning and/or network device management equipment (e.g., a network device provisioning server, a network device management server, etc.) that control and manage the operation of network devices such as L3 network devices and accordingly obtain network layer information from these L3 network devices, may include other types of remote storage devices (e.g., other network devices and/or servers) storing host network layer information and accessible by L2 network device 30. In some illustrative configurations described herein as examples, sources 34 may be L3 network devices such as multi-layer switches, routers, and gateways. These examples are merely illustrative.

Sources 34 may each store network layer information in one or more databases or generally in storage devices or memory containing network layer information. As an example, each source 34 may include one or more databases 36 storing host IP addresses 38. Host IP addresses as stored in some databases 36 may be associated with host identifiers (e.g., host MAC addresses) or other host information such that a lookup operation may be used to obtain a host IP address using the corresponding host information as a key for the lookup operation. In general, databases 36 may store any suitable host network layer information and any associations between the host network layer information and other information associated with the same host in a plurality of database entries (e.g., with each entry containing information on a single host). As examples, databases 36 may include Address Resolution Protocol (ARP) database(s) and/or IP locking database(s). In configurations in which sources 34 are L3 network devices (e.g., network devices 10-2 in FIG. 2), databases 36 may be stored on memory circuitry 24 (FIG. 2) and/or other memory circuitry associated with packet processors 26 (FIG. 2).

L2 network devices such as device 30 may obtain any desired and/or required network layer information such as IP addresses for hosts 14 (e.g., an IP address for authenticated host 14 in FIG. 3) externally from one or more remote sources 34. Based on the externally obtained network layer information for host 14, L2 network device 30 may transmit a message containing the externally obtained network layer information to external equipment. As shown in the example of FIG. 3, network device 30 may obtain network layer information such as a host IP address 38 for connected host 14 from source 34 and may transmit an accounting message for host 14 that contains the externally obtained host IP address as an attribute (e.g., as the framed IP (IPv4 or IPv6) address attribute in the RADIUS accounting message). The message (e.g., the RADIUS accounting message) may be transmitted to an accounting server such as accounting server 46-2 (e.g., a RADIUS server). In response to each instance of obtaining a connected-host IP address (e.g., of host 14 and of other hosts authenticated and connected to network device 30), L2 network device 30 may transmit a corresponding accounting message to accounting server 46-2.

Host authentication server 46-1 and host accounting server 46-2 may be provided as multiple services of a single server (e.g., a AAA server, a RADIUS server, etc.) or as separate servers implemented on separate server equipment at the same or different site(s)).

The transmission of accounting messages containing host IP addresses and/or other network layer information to accounting server 46-2 is merely illustrative. If desired, an L2 network device (e.g., network device 30) may transmit other messages containing the host IP addresses or other network layer information to other types of servers, may transmit messages (e.g., a proxy ARP reply message) containing network layer information to other network devices or other network entities, and/or may generally use the externally obtained network information in other manners (e.g., to perform any suitable network layer functions as an L2 network device).

If desired, after consuming or using the externally obtained network layer information (e.g., to transmit an accounting message), network device 30 may delete or otherwise remove the externally obtained network layer information from local storage. In other words, network device 30 may not need to persistently maintain the network layer information locally (e.g., on memory circuitry 24 and/or memory circuitry associated with packet processors 26 in FIG. 2). This may help reduce the hardware and/or storage requirements of the L2 network device, among other advantages.

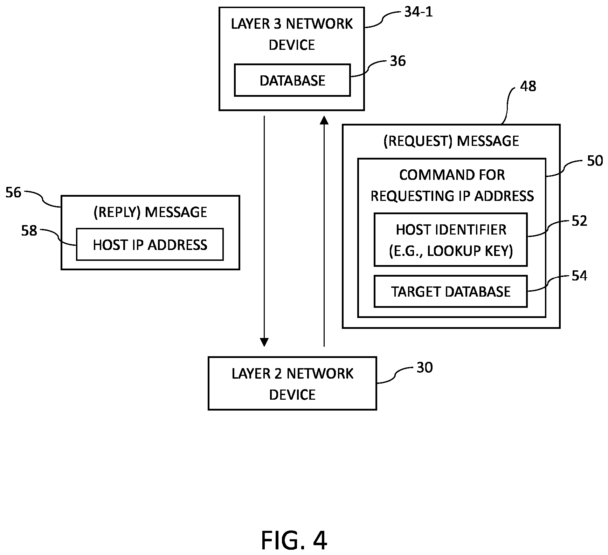

There may be different schemes for L2 network devices (e.g., network devices 10-1 in FIG. 1) to obtain network layer information such as host IP addresses for connected hosts from one or more external sources 34 such as L3 network devices (e.g., network devices 10-2 in FIG. 1). FIGS. 4-7 illustrate various schemes or mechanisms for obtaining network layer information from one or more external sources 34. These schemes may be used separately or in combination (e.g., to provide the advantage(s) afforded by some scheme(s) and/or to avoid the disadvantage(s) imparted by some scheme(s), as desired). In describing these illustrative schemes, source(s) 34 are described to be L3 network device(s) (e.g., network device(s) 10-2 in FIG. 1). However, if desired and as described above, other types of source(s) 34 may similarly be used in the schemes of FIGS. 4-7 instead of L3 network device(s).

FIG. 4 shows an illustrative scheme in which an L2 network device transmits a request message containing a command to request or otherwise obtain network layer information from an L3 network device. As shown in FIG. 4, an L2 network device 30 (e.g., network device 10-1 in FIG. 1, network device 30 in FIG. 3, etc.) may generate, e.g., with one or more processors of device 30, and transmit, e.g., to device 34-1 and using an input-output interface 28 (FIG. 2) of device 30, a request message such as message 48 containing a command such as command 50 for requesting and obtaining an IP address or other network layer information of a connected host such as host 14 in FIG. 3. Command 50 may be a command line interface (CLI) command or other types of instructions, which when executed by one or more processors of L3 network device 34-1 (e.g., network device 10-2 in FIG. 1 serving as an illustrative source 34 in FIG. 3) causes L3 network device 34-1 to output the requested information returned as a result of command 50.

In the example of FIG. 4, command 50 may include or otherwise specify a host identifier 52 and a lookup target (e.g., target database 54) at which host IP addresses are located or maintained on L3 network device 34-1. In particular, the host identifier may be a MAC address or other identifying information of the host for which the IP address is requested. The host identifier may serve as a lookup key when performing a lookup operation in the database (e.g., a given database 36) identified as target database 54.

Depending on the type of the lookup target (e.g., the type of target database 54) in command 50, the type of host identifier 52 provided in command 50 may be different. As an example, when target database 54 identifies an address resolution protocol (ARP) database which stores associations between host MAC addresses and host IP addresses, command 50 may include a host MAC address as identifier 52 to facilitate a lookup operation in the ARP database. If desired, for other types of databases or other lookup targets, other host identifiers and/or other types of information may be included in command 50 to facilitate the corresponding lookup operations. The use of command 50 in obtaining network layer information may provide a targeted approach for obtaining network layer information, as the desired information (e.g., for a given host) may be directly identified by command 50 and output by L3 network device 34-1.

After receiving message 48 and command 50 therein, one or more processors of L3 network device 34-1 may execute command 50 to perform the corresponding lookup operation based on command 50 and identify the requested host IP address stored in the lookup target (e.g., database 36 stored locally on memory circuitry of L3 network device 34-1). Subsequently, L3 network device 34-1 may generate, e.g., with one or more processors of device 34-1, and transmit, e.g., to device 30 and using an input-output interface 28 (FIG. 2) of device 34-1, a reply message such as message 56 which includes the identified host IP address 58 (e.g., resulting from the execution of command 50). Responsive to receiving the externally obtained host IP address 58, L2 network device 30 may generate, e.g., with one or more processors of device 30, and transmit, e.g., to an accounting server and using an input-output interface 28 (FIG. 2) of device 30, an accounting message for the host containing its IP address 58 as an attribute in the accounting message and/or may otherwise use externally obtained IP address 58. If desired, one or more processors of device 30 may discard, delete, or otherwise remove externally obtained host IP address 58 after use (e.g., such that host IP address 58 is not maintained and not continuously stored).

**IP** addresses of the same host may change over time. As such, L2 network device 30 may periodically query or request the IP address of the same host by periodically transmitting messages 48 containing command 50 in the manner described in connection with FIG. 4 to ensure that any updates to the IP address of the host are captured in a timely manner. Responsive to each instance of receiving the requested host IP address from L3 network device 34-1, L2 network device 30 may generate, e.g., with one or more processors of device 30, and transmit, e.g., to an accounting server and using an input-output interface 28 (FIG. 2) of device 30, a corresponding accounting message containing the externally obtained host IP address (or otherwise use the externally obtained host IP address). This may be done even if the current instance of the externally obtained host IP address is the same as the previous instance of the externally obtained host IP address (e.g., the host IP address has not changed across this period of time) as L2 network device 30 may have already deleted the previously obtained host IP address after its use and may be unaware that the host IP address remains the same.

A single L2 network device 30 may be coupled to a number of connected (and authenticated) local hosts 14. The operations described in connection with FIG. 4, including the periodic retrieval of connected-host IP addresses, may be performed by L2 network device 30 on a per-connected-host basis (i.e., for each of these hosts 14).

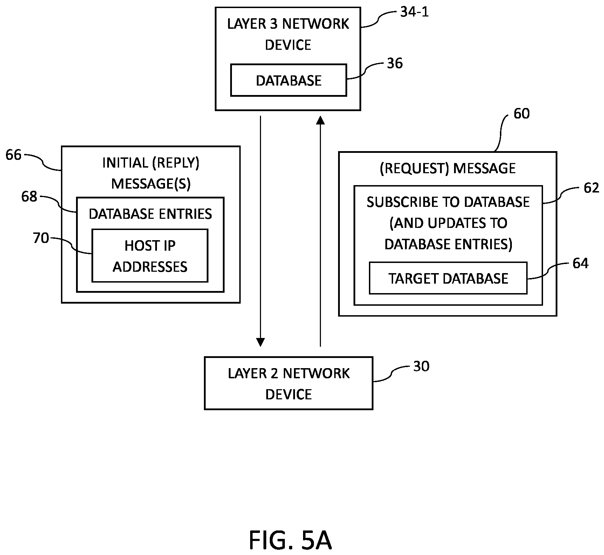

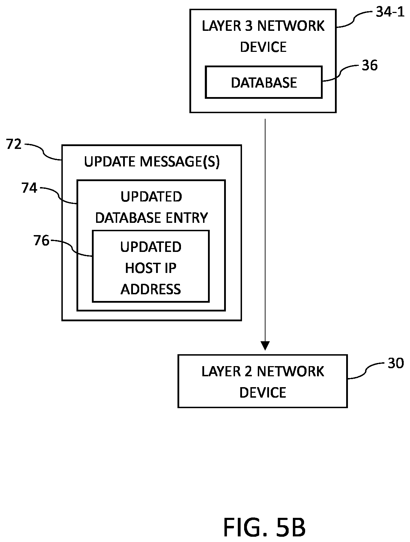

FIGS. 5A and 5B show an illustrative scheme in which an L2 network device transmits a request message containing a subscription request to subscribe to a particular database (e.g., an Address Resolution Protocol (ARP) database, an IP locking database, etc.) maintained locally on an L3 network device. As shown in FIG. 5A, an L2 network device 30 (e.g., network device 10-1 in FIG. 1) may generate, e.g., with one or more processors of device 30, and transmit, e.g., to device 34-1 and using an input-output interface 28 (FIG. 2) of device 30, a request message such as message 60 containing a subscription request 62 to subscribe to a particular subscription target (e.g., a target database 64). Subscription request 62, when processed or executed by one or more processors of L3 network device 34-1, may subscribe L2 network device 30 to receive the current state and/or updated states of the subscription target (e.g., identified by target database 64).

After receiving message 60 and subscription request 62 therein, one or more processors of L3 network device 34-1 may store and maintain an indication of the subscription of L2 network device 30 to database 36 (e.g., identified by target database 64 as the subscription target). Based on subscription request 62, one or more processors of L3 network device 34-1 may provide the current state of database 36 to L2 network device 30 in one or more initial reply messages such as message(s) 66 generated by one or more processors of device 34-1 and transmitted to L2 network device 30 using input-output interface(s) 28 (FIG. 2) of device 34-1. The current state of database 36 may be represented by states of each of the database entries in database 36. As such, all of these database entries may be included as database entries 68 and transmitted to L2 network device 30 in the corresponding message(s) 66. Database 36 may contain network layer information for hosts, and as such, the host network layer information such as host IP addresses 70 and their associations to other host information may be included as part of database entries 68. Each database entry 68 may be associated with a particular (connected and/or authenticated) host in network 8 and may identify an association between a host identifier such as a host MAC address and a host IP address.

Because the externally obtained database entries 68 may include entries for hosts not connected to and/or not authenticated by (or generally not under the purview of) L2 network device 30, one or more processors of network device 30 may identify, out of all of the received entries 68, a subset of entries 68 for connected (and authenticated) local hosts coupled to input-output interfaces of L2 network device 30. Accordingly, L2 network device 30 may generate, e.g., with one or more processors of device 30, and transmit, e.g., to an accounting server and using input-output interface(s) 28 (FIG. 2) of device 30, accounting messages containing host IP addresses 70 in these identified entries 68 for hosts 14 under the purview of device 30 as an attribute of the accounting messages and/or may otherwise use the host **IP** addresses 70 in these identified entries. The remaining irrelevant entries 68 irrelevant to device 30 may be discarded or removed, and may be unused by one or more processors of device 30. The identified entries 68 may also be discarded or otherwise removed after use by one or more processors of device 30.

Advantageously, the use of subscription request 62 (in FIG. 5A) provides a mechanism by which updates to the subscription target (e.g., database 36 on L3 network device 34-1) or more specifically to any information (e.g., database entries) therein may be automatically reported by one or more processors of device 34-1 to L2 network device 30. As such, periodic transmission of request messages to check for updates (e.g., subsequently messages 48 following the initial message 48 as described in connection with FIG. 4) may be omitted.

As shown in FIG. 5B, when an entry in database 36 maintained on memory circuitry of L3 network device 34-1 is updated, L3 network device 34-1 may generate, e.g., with one or more processors of device 34-1, and transmit, e.g., to device 30 and using an input-output interface 28 (FIG. 2) of device 34-1, an update message 72 that contains the updated database entry 74 and consequently any updated host IP address 76 for the updated database entry. In such a manner, any updates to the IP addresses of hosts connected to and/or authenticated by L2 network device 30 may be conveyed by L3 network device 34-1 in messages 72 responsive to the corresponding changes to the database entries associated with these hosts as maintained in database 36.

However, L2 network device 30 may also receive updates in messages 72 for hosts not under the purview of L2 network device 30 (e.g., connected to and/or authenticated by another L2 network device such as another device 10-1 in FIG. 1). As such, for these update messages 72 containing updated IP addresses of unrelated hosts, one or more processors of L2 network device 30 may similarly identify updated database entries 74 for connected (and authenticated) local hosts coupled to input-output interfaces of L2 network device. Accordingly, L2 network device 30 may generate, e.g., with one or more processors of device 30, and transmit, e.g., to an accounting server and using input-output interface(s) 28 (FIG. 2) of device 30, accounting messages containing updated host IP addresses 76 in these identified updated entries 74 for hosts 14 under the purview of device 30 as an attribute of the accounting messages and/or may otherwise use the host IP addresses 76 for these identified updated entries. The remaining updated entries 74 irrelevant to device 30 may be discarded or removed, and may be unused by one or more processors of device 30. The identified entries 74 may also be discarded or otherwise removed after use by one or more processors of device 30.

Unlike with the scheme described in connection with FIG. 4, the scheme described in connection with FIGS. 5A and 5B is not targeted for a particular host. Rather, network layer information (e.g., initial and updated information) and other types of information in the subscription target (e.g., a database of L3 network device 34-1) will be streamed to L2 network device 30. As such, message 60 (FIG. 5A) is not transmitted by one or more processors of device 30 on a per-host basis. Rather, if desired, L2 network device 30 may generate and transmit messages 60 on a per-subscription-target basis (e.g., multiple messages 60 each for a different database 36 maintained on L3 network device 34-1 for cumulatively obtaining the desired network layer information).

While, with the scheme of FIGS. 5A and 5B, L2 network device 30 does not need to generate and transmit numerous request messages to L3 network device 34-1, L2 network device 30 may receive numerous irrelevant database entries in message(s) 66 because some, if not the majority of, entries in a given targeted database 36 may be unrelated to hosts under the purview of L2 network device 30. This can result in excessive processing of entries 68 by one or more processors of device 30 (e.g., to determine that the majority of entries 68 are not relevant to hosts connected to and/or authenticated by L2 network device 30).

As such, in some illustrative configurations, one or more processors of L2 network device 30 may ignore and not process (e.g. not transmit accounting messages based on) the initial batch of received database entries 68 in message(s) 66 (FIG. 5A) to avoid excessive processing of irrelevant database entries at L2 network device 30. In these configurations, L2 network device 30 may instead use the scheme described in connection to FIG. 4 to obtain the current or initial state of IP addresses for connected (and authenticated) hosts 14. In other words, L2 network device 30 may generate, e.g., with one or more processors of device 30, and transmit, e.g., to device 34-1 and using input-output interface(s) 28 (FIG. 2) of device 30, request messages 48 for each of the connected (and authenticated) hosts 14 (e.g., as described in connection with FIG. 4). This may be done in addition to device 30 generating and transmitting a subscription request message 60 (e.g., as described in connection with FIGS. 5A). As such, L2 network device 30 may still rely on update messages 72 (e.g., as described in connection with FIG. 5B) to obtain any updates to IP addresses of hosts and to generate and transmit accounting messages based on the updated IP addresses of the relevant hosts connected to and/or authenticated by device 30 (e.g., using the updated IP addresses as the framed IP address attribute of the accounting messages).

Advantageously, the reliance on update messages 72 (e.g., as described in connection with FIG. 5B) helps eliminate the need of L2 network device 30 having to periodically query or request L3 network device 34-1 for updates (e.g., as described in connection with FIG. 4), which could otherwise occur with relatively high frequency given the desire to obtain updated host IP addresses in a timely manner.

Because a target database 36 maintained at an L3 network device or another external source can often include numerous entries (e.g., for hosts under the purview of a number of different L2 network devices), the majority of update messages 72 in FIG. 5B (and similarly the majority of initial messages 66 in FIG. 5A) provided to an L2 network device 30 may be irrelevant and extraneous (e.g., not for hosts connected to and/or authenticated by the L2 network device 30). Accordingly, even in the scenario where the initial batch of messages 66 is ignored (and replaced with targeted requests of host IP addresses as described in connection with FIG. 4), excessive processing of irrelevant update messages 72 may still be performed by one or more processors of L2 network device 30.

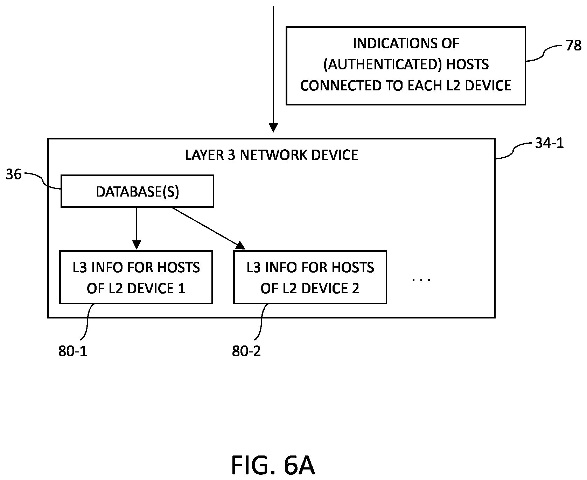

To further improve the efficiency of obtaining network layer information externally by L2 network device 30, L3 network device 34-1 may be configured to curate information for each or at least some of L2 network device(s) 30 coupled to L3 network device 34-1. FIG. 6A is a diagram of an illustrative L3 network device having one or more processors configured to generate and maintain (e.g., on memory circuitry) curated network layer information for one or more L2 network devices.

In the example of FIG. 6A, L3 network device 34-1 (e.g., one or more processors therein) may obtain (e.g., receive) one or more indications 78 of hosts connected to one or more corresponding L2 network devices. As examples, indications 78 may be received from L2 network devices (e.g., L2 network device 30 in FIGS. 3-5), from a network management system (e.g., system 16 in FIG. 1, network device provisioning and/or management equipment, etc.), from a user (e.g., a network administrator providing user input), and/or from any other suitable device. Based on obtaining the one or more indications 78, one or more processors of L3 network device 34-1 may curate a different set of network layer information for hosts of each L2 network device (e.g., a set of host IP addresses that are specific to each L2 network device, or more specifically, specific to hosts under the purview of that L2 network device).

As shown in FIG. 6A, L3 network device 34-1 (e.g., one or more processors therein) may generate device-specific L3 information such as network layer (e.g., IP) information 80-1 of hosts under the purview of a first L2 network device, network layer (e.g., IP) information 80-2 of hosts under the purview of a second L2 network device, and/or additional network layer (e.g., IP) information of additional hosts under the purview of additional L2 network devices. These different sets of information 80 may be obtained by one or more processors of device 34-1 from entries in one or more databases 36 containing the desired network layer information (e.g., host IP addresses and their associations to host identifiers). In particular, different entries of a database 36 may be organized by one or more processors of device 34-1 into a corresponding set of information 80. Each set of information 80 may be updated by one or more processors of device 34-1 in response to the corresponding entries in the source database(s) 36 being updated. As such, curated information 80 may reflect any updates to host network layer information in a timely manner and may be maintained by one or more processors of device 34-1 on memory circuitry of device 34-1 (in addition to databases 36 maintained on the memory circuitry).

Indications 78 may be periodically received by one or more processors of L3 network device 34-1 and used by one or more processors of device 34-1 to update the host information in each set of curated information 80. This may help ensure that curated information 80 remains specific to each L2 network device and its hosts over time.

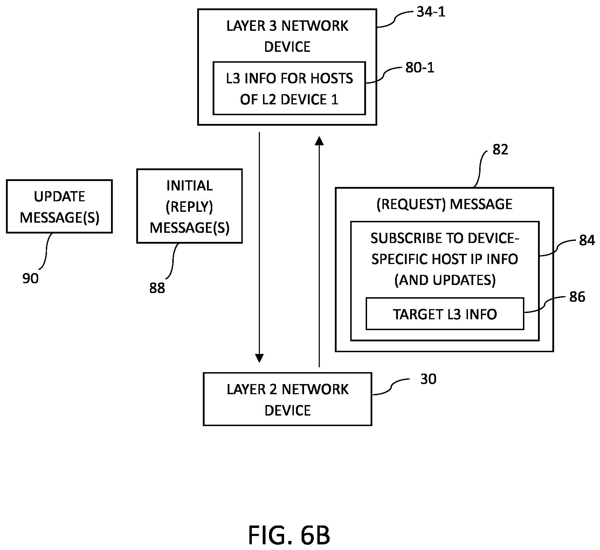

Configured in this manner, L3 network device 34-1 may be configured to facilitate each L2 network device's subscription to its own set of curated network layer information. FIG. 6B is a diagram of an illustrative L2 network device configured to subscribe to its own set of curated network layer information.

In the example of FIG. 6B, L2 network device 30 (e.g., network device 10-1 in FIG. 1) may generate, e.g., with one or more processors of device 30, and transmit, e.g., to device 34-1 and using an input-output interface 28 (FIG. 2) of device 30, a request message such as message 82 containing a subscription request 84 to subscribe to a subscription target (e.g., a particular set of curated information indicated by target network layer information 86). Subscription request 84, when processed or executed by one or more processors of L3 network device 34-1, may subscribe L2 network device 30 to receiving the current state and/or updated states of the subscription target (e.g., curated information 80-1 for device 30 and its hosts as generated in FIG. 6A and identified using target information 86).

After receiving message 82 and subscription request 84 therein, one or more processors of L3 network device 34-1 may store and maintain an indication of the subscription of L2 network device 30 to curated L3 information 80-1 (e.g., identified by target information 86 in message 82). Based on subscription request 84, one or more processors of L3 network device 34-1 may provide the current state of information 80-1 to L2 network device 30 in one or more initial reply messages such as message(s) 88 generated by one or more processors of device 34-1 and transmitted to L2 network device 30 using input-output interface(s) 28 (FIG. 2) of device 34-1, as similarly done for database 36 as described in connection with FIG. 5A. Additionally, based on subscription request 84, one or more processors of L3 network device 34-1 may generate and transmit, e.g., to device 30 and using input-output interface(s) 28 of device 34-1, update messages 90 that contain any updated content in information 80-1 (e.g., that each contain an updated entry or updated information for a given host, including any updated host IP address for the given host in information 80-1), as similarly done for database 36 as described in connection with FIG. 5B.

Based on each of initial messages 88 and/or update messages 90, L2 network device 30 may generate, e.g., with one or more processors of device 30, and transmit, to an accounting server and using an input-output interface 28 (FIG. 2) of device 30, an accounting message for the corresponding host whose network layer information (e.g., IP address) is contained within the corresponding externally obtained message and/or may otherwise use the externally obtained network layer information. If desired, the network layer information obtained externally may be discarded, deleted, or otherwise removed after use.

Using the scheme described in connection with FIGS. 6A and 6B, each L2 network device may subscribe to its own curated set of network layer information (e.g., IP addresses of hosts connected to and/or authenticated by each L2 network device). In other words, L2 network device 30 (FIG. 6B) may subscribe to information 80-1, another L2 network device (e.g., another network device 10-1 in FIG. 1) may subscribe to information 80-2 (FIG. 6A), etc. As such, the majority (if not all) of host IP addresses and/or other host network layer information identified in initial reply messages 88 and update messages 90 may be relevant to hosts under the purview of L2 network device 30 and conveyed in corresponding accounting messages, thereby reducing unnecessary processing of irrelevant initial and/or update messages (e.g., which might be performed in the scheme described in connection with FIGS. 5A and 5B).

In some network configurations, host network layer information (e.g. host IP addresses) of hosts connected to and/or authenticated by (or generally under the purview of) an L2 network device may be stored at multiple sources 34 of network layer information (FIG. 3). Accordingly, a single L2 network device may exchange messages with multiple sources 34 to obtain network layer information for all of its hosts 14.

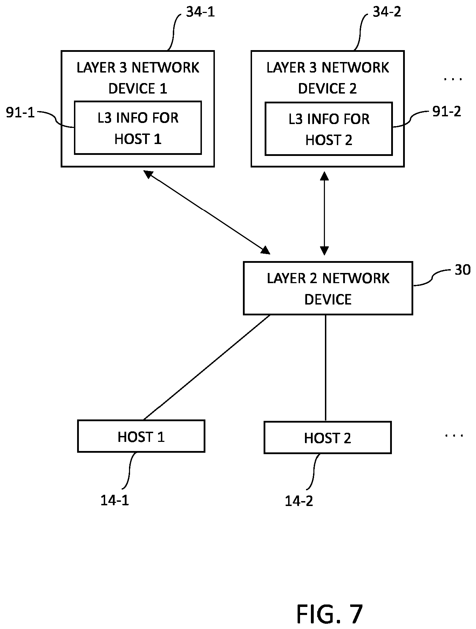

FIG. 7 is a diagram showing how an L2 network device may obtain host network layer information for different hosts from different external sources 34 (e.g., from different L3 network devices). In the example of FIG. 7, a first L3 network device 34-1 (e.g., a first network device 10-2 in FIG. 1) may store network layer information 91-1 for a first host 14-1, e.g., as a database entry in a locally maintained database on memory circuitry of device 34-1, a second L3 network device 34-2 (e.g., a second network device 10-2 in FIG. 1) may store network layer information 91-2 for a second host 14-2, e.g., as a database entry in a locally maintained database on memory circuitry of device 34-2, etc. Entries in the same type of database (e.g., an entry in an ARP database of L3 network device 34-1 and an entry in an ARP database of L3 network device 34-2) may be used to obtain information 91-1 and 91-2 on respective sources 34. If desired, information 91 may also be stored as part of curated sets of information maintained at sources 34 specifically for L2 network device 30 (e.g., devices 34-1 and 34-2 may both perform the operations described in connection with FIGS. 6A and 6B with device 30).

Regardless of the manner in which information 91 is stored at respective sources 34, one or more processors of L2 network device 30 may be configured to communicate (e.g., exchange messages) with each of the sources 34 to obtain information 91 for all of its connected hosts (e.g., hosts 14-1 and 14-2 in FIG. 7). Any single or combination of schemes as described in connection with FIGS. 4-6 may be used to obtain externally maintained host network layer information from each of sources 34 (e.g., from source 34-1 in FIG. 7, from source 34-2 in FIG. 7, etc.). Responsive to each instance of obtaining network layer information such as IP addresses of hosts 14, L2 network device 30 may generate, e.g., with one or more processors, and transmit, e.g., to an accounting server and using an input-output interface 28 (FIG. 2) of device 30, a corresponding accounting message and/or take other suitable actions based on the externally obtained host network layer information.

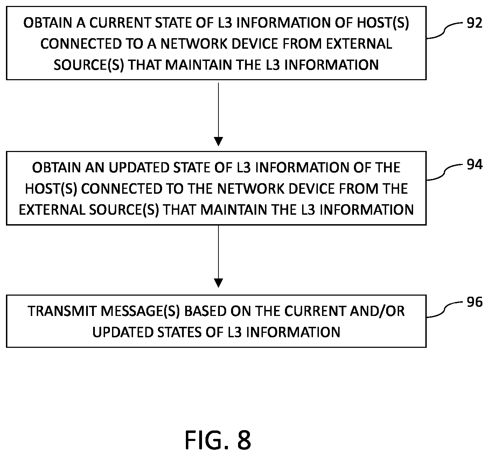

FIG. 8 is a flowchart of illustrative operations for obtaining network layer information from external sources performed by an L2 network device (e.g., network device 10-1 in FIG. 1, an instance of network device 10 in FIG. 2, network device 30 in FIGS. 3-7) having input-output interface(s) communicatively coupled to L3 network device(s) and/or other sources 34 of network layer information. In particular, these operations may be performed by one or more processors of the L2 network device (e.g., control plane processing circuitry 22 and/or data plane processing circuitry 26 in FIG. 2) using other components of the L2 network device (e.g., memory circuitry 24 and/or other memory circuitry, interfaces 28, etc., in FIG. 2). In some configurations described herein as an illustrative example, the operations described in connection with FIG. 8 may be performed by the one or more processors by executing software instructions stored on memory circuitry. If desired, one or more operations described in connection with FIG. 8 may be performed by and/or using other hardware components in the L2 network device.

At block 92, one or more processors of an L2 network device (e.g., forming control plane processing circuitry 22 and/or data plane processing circuitry 26) may obtain a current state of network layer information of host(s) connected to the L2 network device from one or more external sources that locally maintain the network layer information. As examples, the one or more processors may receive, e.g., using one or more (exterior-facing) input-output interfaces of the L2 network device, the current state of network layer information of a given host responsive to a command transmitted to an external source (e.g., as described in connection with FIG. 4), the current state of host network layer information (in an initial set of reply messages) responsive to a subscription to a database maintained at an external source (e.g., as described in connection with FIGS. 5A), and/or the current state of host network lay information (in an initial set of reply messages) responsive to a subscription to a curated set of network layer information maintained at an external source (e.g., as described in connection with FIGS. 6A and 6B),

At block 94, the one or more processors may obtain an updated state of the network layer information of the host(s) connected to the L2 network device from the external source(s) that locally maintain the network layer information. As examples, the one or more processors may receive, e.g., using one or more (exterior-facing) input-output interfaces of the L2 network device, the updated state of network layer information of a given host responsive to a command transmitted to an external source (e.g., as described in connection with FIG. 4), the updated state of host network layer information (in update messages) responsive to a subscription to a database maintained at an external source (e.g., as described in connection with FIGS. 5B), and/or the updated state of host network layer information (in update messages) responsive to a subscription to a curated set of network layer information maintained at an external source (e.g., as described in connection with FIGS. 6A and 6B),

At block 96, the one or more processors may transmit, e.g., to external equipment and using the one or more input-output interfaces, one or more messages based on the current and/or updated states of the network layer information. As an illustrative example, the one or more processors may transmit one or more accounting messages (e.g., RADIUS accounting messages) containing the obtained network layer information (e.g., IP addresses of hosts) as a framed IP address attribute (e.g., as a framed IPv4 address attribute and/or as a framed IPv6 address attribute).

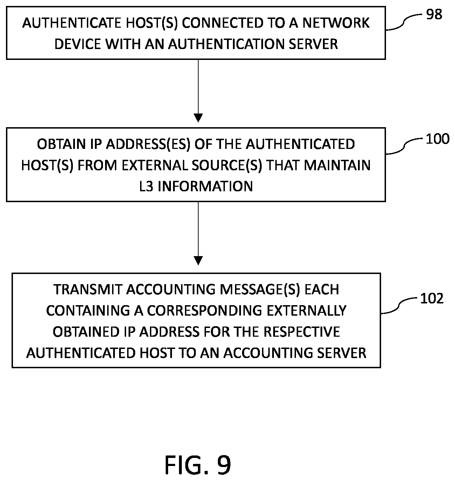

FIG. 9 is a flowchart of illustrative operations for host authentication and accounting performed by an L2 network device (e.g., network device 10-1 in FIG. 1, an instance of network device 10 in FIG. 2, network device 30 in FIGS. 3-7) having input-output interface(s) communicatively coupled to L3 network device(s) and/or other sources 34 of network layer information. In particular, these operations may be performed by one or more processors of the L2 network device (e.g., control plane processing circuitry 22 and/or data plane processing circuitry 26 in FIG. 2) using other components of the L2 network device (e.g., memory circuitry 24 and/or other memory circuitry, interfaces 28, etc., in FIG. 2). In some configurations described herein as an illustrative example, the operations described in connection with FIG. 9 may be performed by the one or more processors by executing software instructions stored on memory circuitry. If desired, one or more operations described in connection with FIG. 9 may be performed by and/or using other hardware components in the L2 network device.

At block 98, one or more processors of an L2 network device (e.g., forming control plane processing circuitry 22 and/or data plane processing circuitry 26) may authenticate one or more hosts connected to the L2 network device with an authentication server. As an example, the one or more processors may transmit, e.g., to the authentication server (e.g., server 46-1 in FIG. 3) and using one or more input-output interfaces of the L2 network device, an authentication request message (e.g., a RADIUS authentication request message) containing host information for the host and may receive, e.g., from the authentication server and using one or more input-output interfaces of the L2 network device, an authentication reply message (e.g., a RADIUS authentication reply message) containing an indication of successful authentication of the host.

The authentication of the host may rely on user credentials (e.g., username, password, etc.) received as user input at the host, host identifier(s) of the host (e.g., a unique host identifier, a host MAC address, etc.), certificate(s) for the host, and/or other host or user identifying information that can be authenticated by the authentication server. Accordingly, these types of information may be included in the authentication request message to the authentication server. The authentication server may include or generally have access to database(s) storing corresponding host or user identifying information to validate the received information in the authentication request message (e.g., based on a lookup operation and/or other more complex validation techniques), thereby authenticating the host.

At block 100, the one or more processors may obtain, from one or more external sources that maintain network layer information, one or more IP addresses of the one or more authenticated hosts. As an example, the one or more processors may perform the operations described in connection with block 92 and/or block 94 in FIG. 8 (or generally the operations described in connection with FIGS. 3-7) to obtain IP addresses of authenticated hosts from external source(s).

At block 102, the one or more processors may transmit, to an accounting server, accounting message(s) each containing a corresponding externally obtained IP address for the respective authenticated host. As an example, the one or more processors may transmit, e.g., to the accounting server (e.g., server 46-2 in FIG. 3, integrated with the authentication server in block 98, etc.) and using one or more input-output interfaces of the L2 network device, accounting request messages (e.g., RADIUS accounting request messages) and/or other types of host accounting messages each containing an externally obtained IP address of the authenticated host (e.g., as a framed IP address attribute). If desired, the one or more processors may perform the operations described in connection with block 102 in FIG. 9 as part of the operations described in connection with block 96 in FIG. 8.

The methods and operations described above in connection with FIGS. 1-9 may be performed by the components of one or more L2 network devices, one or more L3 network devices, and/or one or more servers or other host equipment using software, firmware, and/or hardware (e.g., dedicated circuitry or hardware). Software code for performing these operations may be stored on non-transitory computer-readable storage media (e.g., tangible computer readable storage media) stored on one or more of the components of the network device(s) and/or server(s) or other host equipment. The software code may sometimes be referred to as software, data, instructions, program instructions, or code. The non-transitory computer-readable storage media may include drives, non-volatile memory such as non-volatile random-access memory (NVRAM), removable flash drives or other removable media, other types of random-access memory, etc. Software stored on the non-transitory computer readable-storage media may be executed by processing circuitry on one or more of the components of the network device(s) and/or server(s) or other host equipment (e.g., compute devices of system 16 in FIG. 1, processing circuitry 22 and/or processing circuitry 26 of network device 10 in FIG. 2, processing circuitry 22 and/or processing circuitry 26 of network devices 10-1 and 10-2 in FIG. 1, processing circuitry 22 and/or processing circuitry 26 of L2 network devices 30 in FIGS. 3-7, processing circuitry 22 and/or processing circuitry 26 of L3 network devices 34 in FIGS. 3-7, etc.).

In accordance with an embodiment, a method of handling Internet Protocol (IP) information, the method is provided that includes obtaining, by a network device, an identifier for a host device coupled to the network device, transmitting, by the network device, a first message for obtaining an IP address of the host device to an external device, obtaining, by the network device, the IP address of the host device from the external device based on the transmitted first message, and transmitting, by the network device, a second message containing the IP address of the host device obtained from the external device to external equipment.

In accordance with another embodiment, the first message optionally includes a command to the external device to reply with the IP address of the host device and the command identifies the identifier of the host device.

In accordance with another embodiment, the first message optionally includes a subscription request that subscribes to IP address updates of one or more IP addresses maintained at the external device.

In accordance with another embodiment, the IP address updates optionally include updates of one or more IP addresses of one or more host devices coupled to the network device, the one or more IP addresses of the one or more host devices include the IP address of the host device.

In accordance with another embodiment, the IP address updates optionally include updates of one or more additional IP addresses of one or more additional host devices coupled to an additional network device.

In accordance with another embodiment, the external equipment optionally includes a network management server, and the second message optionally includes a network accounting message containing the IP address of the host device as an attribute in the network accounting message.

In accordance with another embodiment, the network management server optionally includes a Remote Authentication Dial-In User Service (RADIUS) server, the network accounting message optionally includes a RADIUS accounting packet, and the attribute optionally includes a framed IP address attribute in the RADIUS accounting packet.

In accordance with another embodiment, the host device is a host device authenticated for network access during an authentication operation and the network device optionally serves as the authenticator for the authentication operation.

In accordance with another embodiment, the network device optionally includes a data link layer device that lacks locally stored IP information.

In accordance with another embodiment, the external device optionally includes a network layer device that locally stores IP information.

In accordance with an embodiment, a network device is provided that includes one or more input-output interfaces, memory circuitry, and one or more processors coupled to the memory circuitry and configured to: obtain, from an external source using one of the one or more input-output interfaces, an Internet Protocol (IP) address of a host connected to the network device, and transmit, to one or more network management servers using one of the one or more input-output interfaces, an accounting message containing the IP address of the host obtained from the external source.

In accordance with another embodiment, the one or more processors are optionally configured to perform an authentication operation to authenticate the host with the one or more network management servers and the one or more processors are configured to obtain the IP address of the host after the host is authenticated.

In accordance with another embodiment, the one or more processors are optionally configured to obtain, from the external source using one of the one or more input-output interfaces, an updated IP address of the host, and transmit, to the one or more network management servers using one of the one or more input-output interfaces, an additional accounting message containing the updated IP address of the host obtained from the external source.

In accordance with another embodiment, the external source optionally includes an additional network device having routing functionality and configured to store network layer information, including the IP address of the host connected to the network device.

In accordance with another embodiment, the network device is a network device that optionally lacks routing functionality and that is coupled between the additional network device and the host.

In accordance with an embodiment, a network device that is operable with connected hosts and that lacks locally maintained Internet Protocol (IP) addresses of the connected hosts, the network device is provided that includes one or more input-output interfaces, memory circuitry, and one or more processors coupled to the memory circuitry and configured to receive, from an external Layer 3 network device via one of the one or more input-output interfaces, a message that includes network layer information of a given host of the connected hosts, use the received network layer information of the given host to perform an operation, and remove the received network layer information of the given host after the received network layer information of the given host is used to perform the operation.

In accordance with another embodiment, the one or more processors are optionally configured to transmit, to the external Layer 3 network device using one of the one or more input-output interfaces, a request message containing a command, the received message is responsive to the request message, and the network layer information of the given host is identified based on an execution of the command at the external Layer 3 network device.

In accordance with another embodiment, the one or more processors are optionally configured to transmit, to the external Layer 3 network device using one of the one or more input -output interfaces, a request message containing a subscription request identifying a subscription target, the received message is a reply message responsive to the subscription request, and the subscription target includes the network layer information of the given host.

In accordance with another embodiment, the subscription target optionally identifies curated network layer information for the network device maintained on the Layer 3 network device or identifies a database maintained on the Layer 3 network device containing network layer information for hosts connected to a plurality of Layer 2 network devices.

In accordance with another embodiment, the reply message is an initial reply message optionally containing an initial state of the network layer information of the given host in the subscription target or is an update reply message containing an updated state of the network layer information of the given host in the subscription target.

The foregoing is merely illustrative and various modifications can be made to the described embodiments. The foregoing embodiments may be implemented individually or in any combination.

## Claims

1. A method of handling Internet Protocol (IP) information, the method comprising:
obtaining, by a network device, an identifier for a host device coupled to the network device;
transmitting, by the network device, a first message for obtaining an **IP** address of the host device to an external device;
obtaining, by the network device, the **IP** address of the host device from the external device based on the transmitted first message; and
transmitting, by the network device, a second message containing the **IP** address of the host device obtained from the external device to external equipment.

2. The method defined in claim 1, wherein the first message comprises a command to the external device to reply with the **IP** address of the host device and wherein the command identifies the identifier of the host device.

3. The method defined in claim 1, wherein the first message comprises a subscription request that subscribes to **IP** address updates of one or more **IP** addresses maintained at the external device.

4. The method defined in claim 3, wherein the **IP** address updates comprise updates of one or more **IP** addresses of one or more host devices coupled to the network device, the one or more **IP** addresses of the one or more host devices comprise the **IP** address of the host device.

5. The method defined in claim 4, wherein the **IP** address updates comprise updates of one or more additional **IP** addresses of one or more additional host devices coupled to an additional network device.

6. The method defined in claim 1, wherein the external equipment comprises a network management server and wherein the second message comprises a network accounting message containing the IP address of the host device as an attribute in the network accounting message.

7. The method defined in claim 6, wherein the network management server comprises a Remote Authentication Dial-In User Service (RADIUS) server, the network accounting message comprises a RADIUS accounting packet, and wherein the attribute comprises a framed IP address attribute in the RADIUS accounting packet.

8. The method defined in claim 1, wherein the host device is a host device authenticated for network access during an authentication operation and wherein the network device serves as the authenticator for the authentication operation.

9. The method defined in claim 8, wherein the network device comprises a data link layer device that lacks locally stored IP information.

10. The method defined in claim 9, wherein the external device comprises a network layer device that locally stores IP information.

11. A network device comprising:
one or more input-output interfaces;
memory circuitry; and
one or more processors coupled to the memory circuitry and configured to:
obtain, from an external source using one of the one or more input-output interfaces, an Internet Protocol (IP) address of a host connected to the network device; and
transmit, to one or more network management servers using one of the one or more input-output interfaces, an accounting message containing the IP address of the host obtained from the external source.

12. The network device defined in claim 11, wherein the one or more processors are configured to perform an authentication operation to authenticate the host with the one or more network management servers and wherein the one or more processors are configured to obtain the **IP** address of the host after the host is authenticated.

13. The network device defined in claim 11, wherein the one or more processors are configured to:
obtain, from the external source using one of the one or more input-output interfaces, an updated **IP** address of the host; and
transmit, to the one or more network management servers using one of the one or more input-output interfaces, an additional accounting message containing the updated **IP** address of the host obtained from the external source.

14. The network device defined in claim 11, wherein the external source comprises an additional network device having routing functionality and configured to store network layer information, including the **IP** address of the host connected to the network device.

15. The network device defined in claim 14, wherein the network device is a network device that lacks routing functionality and that is coupled between the additional network device and the host.
